# EUROPÄISCHE PATENTANMELDUNG

(11) **EP 3 767 739 A1**
(43) Veröffentlichungstag der Anmeldung: **20.01.2021**
(21) Anmeldenummer: 20182162.6
(22) Anmeldetag: 25.06.2020
(51) Int. Cl.: H01M 50/172

(54) **ESD-SCHUTZEINRICHTUNG, BATTERIEANORDNUNG UND ARBEITSVORRICHTUNG**

(30) Priorität: 19.07.2019 DE 102019210769
(71) Anmelder: Robert Bosch GmbH, 70442 Stuttgart (DE)
(72) Erfinder: Mehlo, Dennis, 72766 Reutlingen (DE); Gyure-Garami, Balazs, 1078 Budapest (HU)

(57) **Zusammenfassung**

Die vorliegende Erfindung betrifft eine ESD-Schutzeinrichtung (1) für eine Batterieanordnung (100), wobei die Batterieanordnung (100) ein Gehäuse (10), einen Masseanschluss (20) und mindestens eine Einzelzelle (80) in dem Gehäuse (10) aufweist und wobei die Schutzeinrichtung (1) ein mit dem Masseanschluss (20) elektrisch verbindbares oder verbundenes und elektrisch leitfähiges Ableitungselement (30) aufweist und wobei das Ableitungselement (30) auf einer oder im Bereich einer und von einer Außenseite (10a) des Gehäuses (10) abgewandten Seite und insbesondere auf oder im Bereich einer Innenseite (10i) des Gehäuses (10) anordenbar oder angeordnet und mit dem Gehäuse (10) elektrisch kapazitiv koppelbar oder gekoppelt ist.

## Beschreibung

### Stand der Technik

Die vorliegende Erfindung betrifft eine ESD-Schutzeinrichtung für eine Batterieanordnung, eine Batterieanordnung als solche sowie eine Arbeitsvorrichtung unter Verwendung einer Batterieanordnung zur Versorgung eines Aggregats mit elektrischer Energie.

Bei vielen technischen Anwendungen werden elektrisch betriebene Aggregate von Arbeitsvorrichtungen zu deren Betrieb über Batterieanordnungen mit elektrischer Energie versorgt. Dies gilt insbesondere für den Bereich von eBikes, Pedelecs, anderen Zweirädern und dergleichen, bei welchen Batterieanordnungen als sogenannte Batteriepacks verwendet werden. Häufig werden derartige Batterieanordnungen mit einem Gehäuse versehen, in dessen Inneren ein oder mehrere Batterieeinzelzellen aufgenommen werden, wobei die Gehäuse aufgrund der Randbedingungen hinsichtlich Verarbeitbarkeit, Haltbarkeit, Schutz sowie Optik und Haptik der Batterieeinzelzellen häufig aus elektrisch leitfähigen Materialien, insbesondere aus Metallen gefertigt sind.

Zur Vermeidung von Problemen im Zusammenhang mit elektrostatischen Entladungen an derartigen elektrisch leitfähigen oder metallischen Batteriegehäusen werden in anderem Zusammenhang bei technischen Anwendungen häufig direkte galvanische Kontaktierungen der Gehäuse mit einem Masseanschluss eingesetzt, wobei zur Etablierung eines derartigen Kontakts häufig Feder- oder Schraubkontakte zum Tragen kommen.

Im Zusammenhang mit den oben genannten Batterieanordnungen oder Batteriepacks ist ein derartiges Vorgehen jedoch nicht zielführend, weil bei den hier in Rede stehenden Anwendungen wegen Beschränkungen hinsichtlich Größe und Geometrie des Bauraums galvanische Kontaktierungen nur mit einem erhöhten Aufwand an Material und bei der Montage realisierbar wären.

### Offenbarung der Erfindung

Die erfindungsgemäße ESD-Schutzeinrichtung weist demgegenüber den Vorteil auf, dass bei vergleichsweise geringem Aufwand an Material und Montage ein zuverlässiger Schutz elektronischer Komponenten einer Batterieanordnung und mit dieser verbundener elektronischer Einheiten gegen elektrostatische Aufladungen und eine Ableitung elektrostatischer Aufladungen in kontrollierter Weise zuverlässig erzielbar sind. Dies wird erfindungsgemäß dadurch erreicht, dass eine ESD-Schutzeinrichtung für eine Batterieanordnung geschaffen wird, wobei die Batterieanordnung ein Gehäuse, insbesondere aus einem elektrisch leitfähigen Material, einen Masseanschluss und mindestens eine Batterieeinzelzelle in dem Gehäuse aufweist. Erfindungsgemäß weist die Schutzeinrichtung ein mit dem Masseanschluss elektrisch verbindbares oder verbundenes und elektrisch leitfähiges Ableitungselement auf. Das Ableitungselement ist auf einer oder im Bereich einer und von einer Außenseite des Gehäuses abgewandten Seite und insbesondere auf oder im Bereich einer Innenseite des Gehäuses anordenbar oder angeordnet und mit dem Gehäuse elektrisch kapazitiv koppelbar oder gekoppelt. Erfindungsgemäß wird also statt einer herkömmlichen direkten galvanischen Kontaktierung oder Kopplung zwischen dem Gehäuse und dem Ableitungselement an den Masseanschluss eine kapazitive Kopplung mit einer vergleichsweise hochohmigen Ableitung für die elektrostatische Aufladung über das Ableitungselement an den Masseanschluss zur Realisierung des Schutzmechanismus und der Ableitung eingesetzt, welche sich auch bei verschärften Randbedingungen und starken Einschränkungen hinsichtlich der Größe und der Geometrie des Bauraums mit einfachen Mitteln und in zuverlässiger Weise realisieren lässt.

Die Unteransprüche zeigen bevorzugte Weiterbildungen der Erfindung.

Bei einer bevorzugten Ausgestaltungsform der erfindungsgemäßen Schutzeinrichtung ist - insbesondere zur Ausbildung oder Realisierung der kapazitiven Kopplung zwischen Ableitungselement und Gehäuse - das Ableitungselement zum Gehäuse und insbesondere zu einer oder mehreren Gehäuseflächen räumlich beabstandet angeordnet.

Dies kann in vorteilhafter Weise bei Ausführungsformen der erfindungsgemäßen Schutzeinrichtung mit einem Abstand von weniger als 1 mm, mit einem Abstand von weniger als 0,1 mm, mit einem Abstand von weniger als 0,01 mm und/oder mit einem abschnittsweise konstanten oder insgesamt konstanten Abstand ausgeführt sein.

Alternativ oder zusätzlich ist es gemäß einem anderen bevorzugten und vorteilhaften Ausführungsbeispiel der erfindungsgemäßen Schutzeinrichtung denkbar - insbesondere zur Ausbildung der kapazitiven Kopplung zwischen Ableitungselement und Gehäuse - zwischen dem Ableitungselement und dem Gehäuse - also in einem Zwischenraum zwischen Gehäuse und Ableitungselement - teilweise oder vollständig einen evakuierten Bereich, ein Vakuum, ein Material mit einer geringen elektrischen Leitfähigkeit, ein Material mit einer um einen Faktor 10³ oder mehr geringeren elektrischen Leitfähigkeit als der elektrischen Leitfähigkeit des Ableitungselements, ein Material mit einem elektrischen Widerstand im Bereich von mindestens 10⁶ Ω, 10⁷ Ω, 10⁸ Ω oder mehr und/oder ein elektrischer Isolator auszubilden.

Bei einer anderen vorteilhaften Ausführungsform der erfindungsgemäßen Schutzeinrichtung kann - insbesondere zur Ausbildung der kapazitiven Kopplung zwischen Ableitungselement und Gehäuse - zwischen dem Ableitungselement und dem Gehäuse als Zwischenraummaterial Luft und/oder ein chemisch inertes Gas ausgebildet sein, zum Beispiel Kohlenstoffdioxid, Stickstoff und/oder ein Edelgas.

Zusätzlich oder alternativ kann daran gedacht werden - insbesondere zur Ausbildung der kapazitiven Kopplung zwischen Ableitungselement und Gehäuse - das Ableitungselement als Platte, Folie, Lamelle, Paneele, Plättchen, flächenhafter Aufbau auszubilden und/oder der der Außenseite des Gehäuses gegenüberliegenden Seite, insbesondere der Innenseite des Gehäuses, abschnittsweise oder als Ganzes konform oder flächenkonform folgend oder entsprechend auszugestalten.

Mit diesen Maßnahmen lassen sich besonders hohe elektrische Kapazitäten zwischen der Gehäuseinnenfläche und dem Ableitungselement erzielen und bereitstellen, mit deren Hilfe elektrostatische Aufladungen besonders umfänglich, schnell und zuverlässig aufgenommen werden können, um eine nachgeschaltete Elektronik zu schützen und um die Ableitung der elektrischen Ladung über einen verbleibenden Restwiderstand an den Masseanschluss oder Erdungsanschluss zu gewährleisten.

Die Zuverlässigkeit der Schutzfunktion und des Ableitens elektrostatischer Aufladungen am Batteriegehäuse lassen sich weiter verbessern und steigern, wenn gemäß einem anderen vorteilhaften Ausführungsbeispiel der vorliegenden Erfindung die Schutzeinrichtung - insbesondere zur Ausbildung der kapazitiven Kopplung zwischen Ableitungselement und Gehäuse - das Ableitungselement mit oder aus einem elektrisch leitfähigen Material gebildet ist, insbesondere mit oder aus einem Metall, einem metallischen Material, Aluminium, Kupfer, einem elektrisch leitfähigen Kunststoffmaterial und/oder mit einem Material, mit einer elektrischen Leitfähigkeit, die um einen Faktor 10³ größer ist als die elektrische Leitfähigkeit des Bereichs, des Zwischenraums und/oder des Materials zwischen dem Ableitungselement und dem Gehäuse.

Ferner betrifft die vorliegende Erfindung auch eine Batterieanordnung als solche, insbesondere für eine mit der Batterieanordnung verbindbare oder verbundene elektrische und/oder elektronische Einrichtung.

Die Batterieanordnung ist mit einem Gehäuse, einem Masseanschluss und mit mindestens einer Batterieeinzelzelle in dem Gehäuse ausgebildet. Des Weiteren weist die Batterieanordnung eine erfindungsgemäß ausgestaltete ESD-Schutzeinrichtung auf. Das elektrisch leitfähige Ableitungselement der zu Grunde liegenden ESD-Schutzeinrichtung ist mit dem Masseanschluss elektrisch verbindbar oder verbunden. Das Ableitungselement ist auf einer oder im Bereich einer von einer Außenseite des Gehäuses abgewandten Seite und insbesondere auf oder im Bereich einer Innenseite des Gehäuses anordenbar oder angeordnet und mit dem Gehäuse elektrisch kapazitiv koppelbar oder gekoppelt.

Eine vorteilhafte Weiterbildung der erfindungsgemäßen Batterieanordnung weist mindestens eine elektrische oder elektronische Einrichtung und ein elektrisches Isolationsmittel auf. Dabei kann es sich zum Beispiel um eine Steuerung, Temperaturüberwachung, Ladungszustandsüberwachung und dergleichen handeln.

Das elektrische Isolationsmittel ist erfindungsgemäß durch seine geometrische Ausgestaltung und/oder materielle Zusammensetzung eingerichtet, die mindestens eine elektrische oder elektronische Einrichtung der Batterieanordnung elektrisch vom Ableitungselement der ESD-Schutzeinrichtung zu isolieren und/oder galvanisch zu trennen.

Das elektrische Isolationsmittel kann insbesondere als ein(e) oder mit einem/r Band, Folie, Tape, Schichtstruktur, Kunststoffmaterial und/oder Polymermaterial ausgebildet sein.

Des Weiteren ist Gegenstand der vorliegenden Erfindung auch eine allgemeine Arbeitsvorrichtung, welche mit einem elektrisch betreibbaren Aggregat und mit einer Batterieanordnung zur Versorgung des Aggregats mit elektrischer Energie zu dessen gesteuertem Betrieb ausgebildet ist.

Dabei ist oder sind auch eine erfindungsgemäß ausgestaltete Batterieanordnung und/oder eine erfindungsgemäße ESD-Schutzeinrichtung ausgebildet.

Bei einer vorteilhaften Weiterbildung der vorliegenden Erfindung ist die Arbeitsvorrichtung insbesondere als mit Motorkraft antreibbares Fahrzeug, insbesondere als eBike, Elektrofahrrad, Pedelec oder dergleichen ausgebildet.

### Kurzbeschreibung der Figuren

Unter Bezugnahme auf die beigefügten Figuren werden Ausführungsformen der Erfindung im Detail beschrieben.
- Figur 1: zeigt schematisch und nach Art eines elektrischen Ersatzschaltbildes eine Ausführungsform der erfindungsgemäßen ESD-Schutzeinrichtung im Zusammenhang mit einer Ausführungsform der erfindungsgemäßen Batterieanordnung.
- Figur 2: zeigt schematisch und in perspektivischer Ansicht und unter Fortlassung des Gehäuses eine andere Ausführungsform der erfindungsgemäßen Batterieanordnung unter Verwendung einer Ausführungsform der erfindungsgemäßen ESD-Schutzeinrichtung.
- Figur 3: zeigt schematisch und nach Art einer teilweise geschnittenen Draufsicht eine weitere Ausführungsform der erfindungsgemäßen Batterieanordnung unter Verwendung einer Ausführungsform der erfindungsgemäßen ESD-Schutzeinrichtung.
- Figur 4: zeigt schematisch und nach Art eines elektrischen Ersatzschaltbildes eine herkömmliche ESD-Schutzeinrichtung mit direkter galvanischer Kopplung oder Kontaktierung im Zusammenhang mit einer herkömmlichen Batterieanordnung.

### Bevorzugte Ausführungsformen der Erfindung

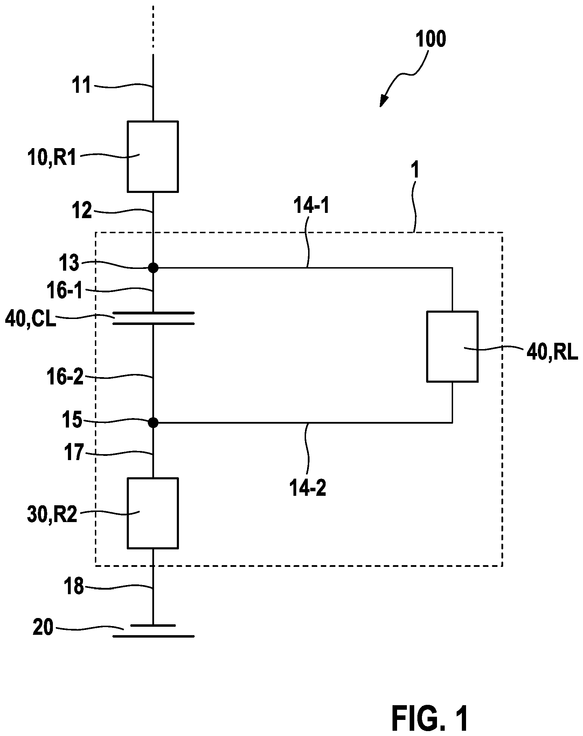

Nachfolgend werden unter Bezugnahme auf die Figuren 1 bis 4 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

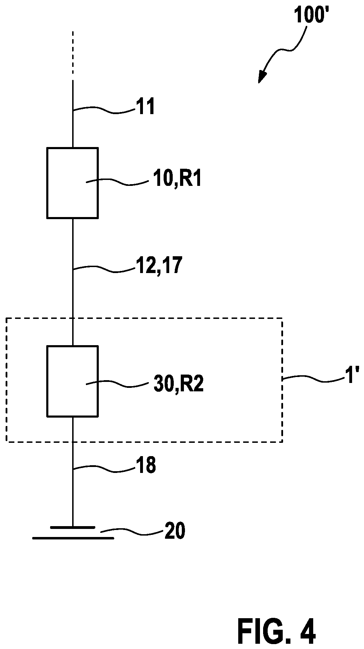

Bevor auf Details der vorliegenden Erfindung unter Bezugnahme auf die Figuren eingegangen wird, sollen zunächst - auch unter Bezugnahme auf Figur 4 - allgemeine Aspekte des technischen Zusammenhangs und Hintergrunds der vorliegenden Erfindung erläutert werden.

Figur 4 zeigt dazu schematisch und nach Art eines elektrischen Ersatzschaltbildes eine herkömmliche ESD-Schutzeinrichtung 1' mit direkter galvanischer Kopplung oder Kontaktierung im Zusammenhang mit einer herkömmlichen Batterieanordnung 100'.

Batterien - aufgefasst als Batterieanordnungen 100, 100' im Sinne der vorliegenden Erfindung - für eBikes, Zweiräder und auch für allgemeine Arbeitsvorrichtungen mit elektrisch betriebenen Aggregaten bestehen häufig aus einem Verbund von z.B. zylindrischen Einzelzellen 80. Dieser Verbund von Einzelzellen 80 wird auch als Batteriepack bezeichnet. Dieses Batteriepack wird in einem Batteriegehäuse 10 gehalten und gelagert, z.B. unter Verwendung Zellhalterung 81, die auch der polkonformen Kontaktierung dienen können.

Viele Produkte, welche als Außenanwendung gedacht sind müssen durch ein derartiges Gehäuse 10 vor externen Umwelteinflüssen geschützt werden. Die wasser- und schmutzempfindlichen Bauteile, zum Beispiel die Zellen 80 selbst oder auch Komponenten 60 einer Elektronik werden im Gehäuse 10 mitverpackt und geschützt. Das Gehäuse 10 hat also die Funktion, Schmutz und Wasser außen zu halten und gleichzeitig einen Berührungsschutz der inneren Komponenten 60 der Batterieanordnung 100, 100' und der Zellen 80 selbst von außen zu gewährleisten.

Aufgrund der hohen spezifischen Steifigkeit sowie des duktilen Verhaltens bei Extrembelastung wird oft Aluminium als Material für ein Batteriegehäuse 10 verwendet.

Zusätzlich vermittelt Aluminium dem Endkunden einen hochwertigen Eindruck des Produktes. So werden Produkte mit einem metallischen Gehäuse im Vergleich zu Produkten mit Gehäusen aus Kunststoff als höherwertig empfunden.

Die vorliegende Erfindung ist unter anderem auch im Fokus mit der Problematik der Handhabung elektrostatische Aufladungen zu sehen:
Durch Reibung zwischen zwei Materialien kann es zu einer elektrostatischen Aufladung kommen, auch am Menschen, z.B. bei der Handhabung von Gegenständen. Bei einem Kontakt zu einem metallischen Gegenstand - zum Beispiel einem Batteriegehäuse 10 - kann es zu einer elektrostatischen Entladung, auch ESD genannt, kommen. Hierbei können elektrische Spannungen von bis zu 8000 V übertragen werden.

Derartig hohe Spannungen können unter Umständen auch auf elektrische oder elektronische Komponenten 60 der Batterieanordnung 100, 100' selbst oder nachgeschalteter Einheiten überspringen oder übertreten. Eine solche Entladung kann dazu führen, dass sensible Bauteile - wie zum Beispiel Mikroprozessoren - dauerhaft beschädigt werden.

Aufgrund dieser Defekt wird die Elektronik insgesamt irreversibel geschädigt oder zerstört, die Batterie ist defekt.

Metallische oder elektrisch leitfähige Batteriegehäuse 10 allgemein können ESD-Ladungen weiterleiten. Sie isolieren die sensible Elektronik 60 nicht ohne Weiteres.

Wie bereits oben erwähnt wurde, können bei einer ESD-Entladung Bauteile 60 dauerhaft beschädigt oder zerstört werden, so dass die zu Grunde liegende Batterie 100, 100' unbrauchbar wird.

In Figur 4 mit einer gewöhnlichen Batterieanordnung 100' besteht eine herkömmliche ESD-Schutzeinrichtung 1' aus einem Ableitungselement 30 mit einem entsprechenden Ableitungswiderstand R2, welches über Teilpfade 11, 12, 17, und 18 in Serie geschaltet ist, und zwar über einen direkten galvanischen Kontakt, mit einem Batteriegehäuse 10 mit ohmschem Widerstand R1 einerseits und mit dem Masseanschluss 20 andererseits.

Im ESD-Fall kann eine auf das Gehäuse 10 der herkömmlichen Batterieanordnung 100' aufgeprägte ESD-Ladung oder -Spannung zum Schutz von elektronischen Komponenten 60 der Batterieanordnung 100' über den direkten galvanischen Kontakt unmittelbar an die Masse oder Erdung 20 abgeleitet werden.

Wie oben bereits erwähnt wurde, ist diese Form des ESD-Schutzes bei hinsichtlich von Größe und/oder Geometrie beschränktem Bauraum, wenn überhaupt, nur sehr aufwendig und damit nur bedingt realisierbar.

Daraus ergibt sich einerseits, dass durch die herkömmliche Anordnung einer ESD-Schutzeinrichtung 1' zwar grundsätzlich ein gewisser Schutz im Hinblick auf ESD-Entladungen möglich ist. Andererseits jedoch kann die herkömmliche ESD-Schutzeinrichtung 1' nicht unter allen Randbedingungen hinsichtlich Bauraumgröße und Bauraumgeometrie mit einfachen, zuverlässigen und kostengünstigen Maßnahmen realisiert werden.

Die vorliegende Erfindung greift diese Problematik auf und bietet eine alternative Vorgehensweise an, bei welcher auch bei reduzierter Bauraumgröße und stark eingeschränkter Bauraumgeometrie mit einfachen, zuverlässigen und kostengünstigen Mitteln ein ESD-Schutz realisierbar ist.

Insbesondere wird im Zusammenhang mit der vorliegenden Erfindung auch ein Bauteil oder eine Bauteilkomponente als ESD-Schutzeinrichtung 1 vorgestellt, welches zu einer gezielten Ableitung von ESD-Ladungen und -Spannungen von metallischen oder allgemein elektrisch leitfähigen Gehäusen 10 zu einer Erdung 20 geeignet ist und einen Schutz für eine Batterieelektronik 60 oder für eine Elektronik einer nachgeschalteten Komponente bietet.

Die Besonderheit beim erfindungsgemäßen Vorgehen ist die Verwendung einer kapazitiven Anbindung zwischen dem Potential am Batteriegehäuse 10 und der Masse/Erdung realisiert über einen Masseanschluss 20.

Wie oben bereits im Detail im Hinblick auf herkömmliche ESD-Schutzeinrichtungen 10' dargelegt wurde, muss zur gezielten Ableitung von ESD-Ladungen ein spannungsführendes Teil herkömmlicher- oder normalerweise galvanisch und/oder stoffschlüssig mit einem zu Grunde liegenden Ableitungselement 30 verbunden werden.

Wie bereits erwähnt wurde, kann dies bei einem Batteriegehäuse 10 unter Umständen nur sehr schwierig und mit hohem Aufwand realisiert werden.

Bei einem extrudierten Batteriegehäuse 10 ist dieser Aufwand aufgrund der Bauteilgeometrie zum Beispiel deshalb so hoch, weil Verbindungselemente meist nur in axialer Richtung angebracht werden können.

Die vorliegende Erfindung beschreibt entsprechend ein alternatives Konzept für ein Ableitungselement 30, welches im Inneren eines zu Grunde liegenden Batteriegehäuses 10 angebracht wird und durch den Aufbau der Batterie 100, 100' sehr nahe an das metallische Gehäuse 10, aber zu diesem räumlich beabstandet positioniert ist oder wird.

Durch dieses Vorgehen wird eine kapazitive Kopplung des Ableitungselements 30 mit dem Gehäuse 10 geschaffen. Es besteht keine direkte, elektrisch leitende, niederohmige und/oder galvanische Anbindung des Ableitungselements 30 zum Gehäuse 10.

So wird der ESD-Entladung einen dedizierten Pfad zur Entladung gegeben. Dieser Pfad 14-1, 14-2 gemäß Figur 1 ist im Vergleich zu den anderen möglichen Strompfaden niederohmiger mittels einer kapazitiven Kopplung an das Gehäuse 10 angebunden.

Als weitere Maßnahme wird der elektrische Widerstand zwischen dem Gehäuse 10 und empfindlichen elektrischen Bauteilen 60 auf ein Maximum vergrößert, zum Beispiel gemäß Figur 1 über den Luftwiderstand RL.

Dies wird entweder durch die Vergrößerung der Luftstrecke oder durch das Isolieren der Baugruppe 60 mit Kunststoffteilen 70 ermöglicht.

Es ist Ziel dieser Maßnahmen, eine elektrostatische Entladung auf kritische elektrische Bauteile 60 zu verhindern.

Figur 1 zeigt dazu schematisch und nach Art eines elektrischen Ersatzschaltbildes eine Ausführungsform der erfindungsgemäßen ESD-Schutzeinrichtung 1 im Zusammenhang mit einer Ausführungsform der erfindungsgemäßen Batterieanordnung 100.

Aus dem in Figur 1 dargestellten Ersatzschaltbild ergibt sich im Vergleich zur herkömmlichen Anordnung gemäß Figur 4 eine Aufspaltung des Gesamtpfads zwischen dem Gehäuse 10 mit Ohmschem Widerstand R1 und dem Masseanschluss 20 mit zusätzlichen Teilpfaden 14-1, 14-2, 16-1, 16-2 zwischen dem Gehäuse 10 und dem Ableitungselement 30 und somit zwischen den ursprünglichen Teilpfaden 12 und 17 an den Knoten 13 und 15.

Diese Aufspaltung wird über die Ausbildung eines Zwischenraums 40 mit räumlicher Beabstandung zwischen dem Gehäuse 10 und dem Ableitungselement 30 und einer entsprechend elektrisch isolierenden Anordnung mit Ausbildung einer kapazitiven Kopplung zwischen dem Gehäuse 10 und dem Ableitungselement 30 realisiert

Dies bedeutet mit anderen Worten, dass durch die räumliche Beabstandung mit Zwischenraum 40 eine Kapazität CL in den Teilpfaden 16-1 und 16-2 über die einander direkt gegenüberliegenden Flächen des Gehäuses 10 und insbesondere seiner Innenseite 10i und dem Ableitungselement 30 zwischen den Widerständen R1 und R2 für das Gehäuse 10 bzw. für das Ableitungselement 30 ausgebildet und definiert wird. Zusätzlich liegt in den Teilpfaden 14-1 und 14-2 eine Restleitfähigkeit oder ein Restwiderstand RL des Zwischenraums 40 parallel zur Kapazität CL vor, über welchen physikalisch die Übertragung der ESD-Ladung vom Gehäuse 10 über das Ableitungselement 30 an den Masseanschluss 20 erfolgt.

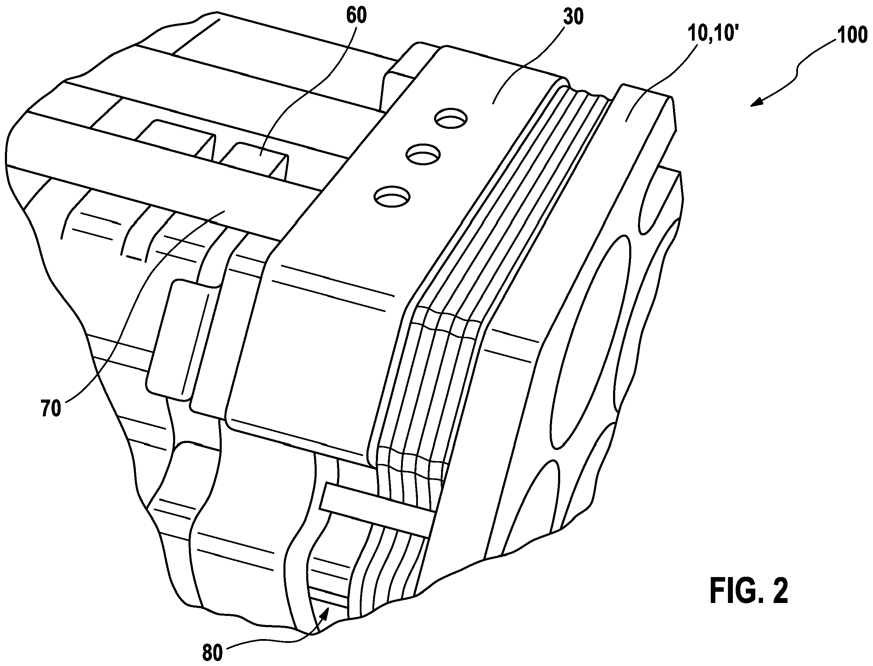

Figur 2 zeigt schematisch und in perspektivischer Ansicht und im Wesentlichen unter Fortlassung des Gehäuses 10 eine andere Ausführungsform der erfindungsgemäßen Batterieanordnung 100 unter Verwendung einer Ausführungsform der erfindungsgemäßen ESD-Schutzeinrichtung 1.

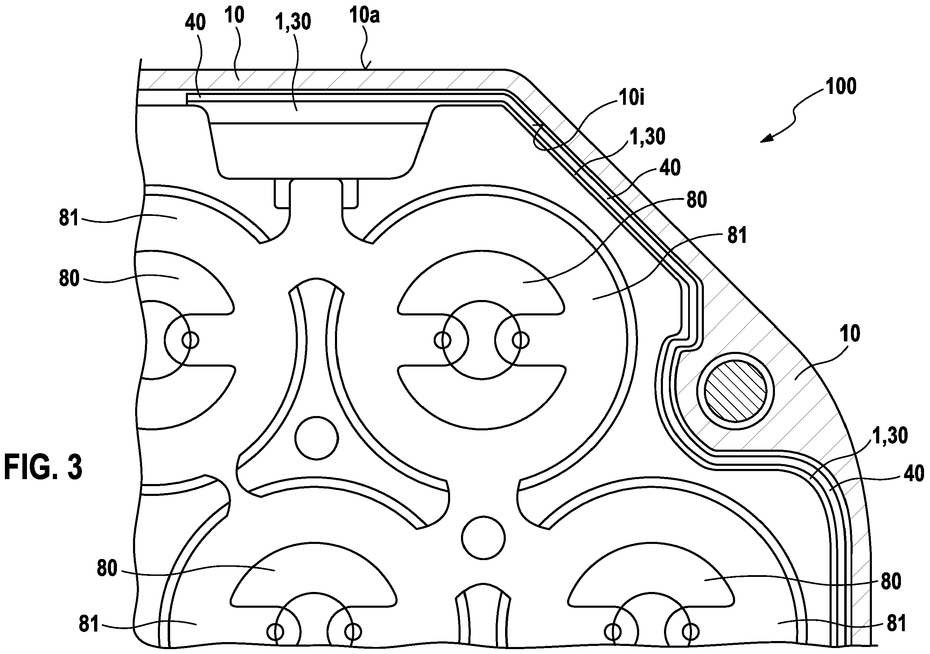

Figur 3 zeigt schematisch und nach Art einer teilweise geschnittenen Draufsicht eine weitere Ausführungsform der erfindungsgemäßen Batterieanordnung 100 unter Verwendung einer Ausführungsform der erfindungsgemäßen ESD-Schutzeinrichtung 1.

Zu erkennen sind hier die Außenseite 10 a und die Innenseite 10 i des Gehäuses 10 sowie der Zwischenraum 40 zwischen dem Gehäuse 10 und dem Ableitungselement 30 als maßgeblicher Teil der ESD-Schutzeinrichtung 1 gemäß der vorliegenden Erfindung.

Die Einzelzellen 80 sind über Zellenhalter 81 im Inneren des Gehäuses 10 gehaltert und entsprechend polkonform kontaktiert.

## Patentansprüche

1. ESD-Schutzeinrichtung (1) für eine Batterieanordnung (100), wobei die Batterieanordnung (100) ein Gehäuse (10), insbesondere aus einem elektrisch leitfähigen Material, einen Masseanschluss (20) und mindestens eine Batterieeinzelzelle (80) in dem Gehäuse (10) aufweist und wobei:
- die Schutzeinrichtung (1) ein mit dem Masseanschluss (20) elektrisch verbindbares oder verbundenes und elektrisch leitfähiges Ableitungselement (30) aufweist und
- das Ableitungselement (30) auf einer oder im Bereich einer und von einer Außenseite (10a) des Gehäuses (10) abgewandten Seite und insbesondere auf oder im Bereich einer Innenseite (10i) des Gehäuses (10) anordenbar oder angeordnet und mit dem Gehäuse (10) elektrisch kapazitiv koppelbar oder gekoppelt ist.

2. Schutzeinrichtung (1) nach Anspruch 1, bei welcher - insbesondere zur Ausbildung der kapazitiven Kopplung zwischen Ableitungselement (30) und Gehäuse (10) - das Ableitungselement (30) zum Gehäuse (10) und insbesondere zu einer oder mehreren Gehäuseflächen (10i) räumlich beabstandet angeordnet ist, insbesondere mit einem Abstand von weniger als 1 mm, mit einem Abstand von weniger als 0,1 mm, mit einem Abstand von weniger als 0,01 mm und/oder mit einem abschnittsweise konstanten oder insgesamt konstanten Abstand.

3. Schutzeinrichtung (1) nach einem der vorangehenden Ansprüche, bei welcher - insbesondere zur Ausbildung der kapazitiven Kopplung zwischen Ableitungselement (30) und Gehäuse (10) - zwischen dem Ableitungselement (30) und dem Gehäuse (10) ein teilweise oder vollständig evakuierter Bereich, ein Vakuum, ein Material (40) mit einer geringen elektrischen Leitfähigkeit, ein Material (40) mit einer um einen Faktor 10³ oder mehr geringeren elektrischen Leitfähigkeit als der elektrischen Leitfähigkeit des Ableitungselements, ein Material (40) mit einem elektrischen Widerstand im Bereich von mindestens 10⁶ Ω, 10⁷ Ω, 10⁸ Ω oder mehr und/oder ein elektrischer Isolator ausgebildet ist.

4. Schutzeinrichtung (1) nach einem der vorangehenden Ansprüche, bei welcher - insbesondere zur Ausbildung der kapazitiven Kopplung zwischen Ableitungselement (30) und Gehäuse (10) - zwischen dem Ableitungselement (30) und dem Gehäuse (10) als Zwischenraummaterial (40) Luft und/oder ein chemisch inertes Gas ausgebildet ist.

5. Schutzeinrichtung (1) nach einem der vorangehenden Ansprüche, bei welcher - insbesondere zur Ausbildung der kapazitiven Kopplung zwischen Ableitungselement (30) und Gehäuse (10) - das Ableitungselement (30) als Platte, Folie, Lamelle, Paneele, Plättchen, flächenhafter Aufbau ausgebildet ist und/oder der der Außenseite (10a) des Gehäuses (10) gegenüberliegenden Seite, insbesondere der Innenseite (10i) des Gehäuses (10), abschnittsweise oder als Ganzes konform oder flächenkonform folgt oder entspricht.

6. Schutzeinrichtung (1) nach einem der vorangehenden Ansprüche, bei welcher - insbesondere zur Ausbildung der kapazitiven Kopplung zwischen Ableitungselement (30) und Gehäuse (10) - das Ableitungselement (30) mit oder aus einem elektrisch leitfähigen Material (31) gebildet ist, insbesondere mit oder aus einem Metall, einem metallischen Material, Aluminium, Kupfer, einem elektrisch leitfähigen Kunststoffmaterial und/oder mit einem Material, mit einer elektrischen Leitfähigkeit, die um einen Faktor 10³ größer ist als die elektrische Leitfähigkeit des Bereichs und/oder des Materials (40) zwischen dem Ableitungselement (30) und dem Gehäuse (10).

7. Batterieanordnung (100) für eine mit der Batterieanordnung verbindbare oder verbundene elektrische und/oder elektronische Einrichtung,
- mit:
- einem Gehäuse (10), einem Masseanschluss (20) und mindestens einer Batterieeinzelzelle (80) in dem Gehäuse (10) und
- einer ESD-Schutzeinrichtung (1) nach einem der vorangehenden Ansprüche,
- bei welcher:
- das elektrisch leitfähige Ableitungselement (30) der ESD-Schutzeinrichtung (1) mit dem Masseanschluss (20) elektrisch verbindbar oder verbunden eingerichtet ist und
- das Ableitungselement (30) auf einer oder im Bereich einer von einer Außenseite (10a) des Gehäuses (10) abgewandten Seite und insbesondere auf oder im Bereich einer Innenseite (10i) des Gehäuses (10) anordenbar oder angeordnet und mit dem Gehäuse (10) elektrisch kapazitiv koppelbar oder gekoppelt ist.

8. Batterieanordnung (100) nach Anspruch 7, welche mindestens eine elektrische oder elektronische Einrichtung (60) und ein elektrisches Isolationsmittel (70) aufweist,
wobei:
- das elektrische Isolationsmittel (70) durch seine geometrische Ausgestaltung und/oder materielle Zusammensetzung eingerichtet ist, die mindestens eine elektrische oder elektronische Einrichtung (60) elektrisch vom Ableitungselement (30) der ESD-Schutzeinrichtung (1) zu isolieren und/oder galvanisch zu trennen, und
- das elektrische Isolationsmittel (70) insbesondere als ein(e) oder mit einem/r Band, Folie, Tape, Schichtstruktur, Kunststoffmaterial und/oder Polymermaterial ausgebildet ist.

9. Arbeitsvorrichtung mit einem elektrisch betreibbaren Aggregat und mit einer Batterieanordnung (100) zur Versorgung des Aggregats mit elektrischer Energie zu dessen gesteuertem Betrieb,
- bei welcher die Batterieanordnung (100) nach einem der Ansprüche 7 oder 8 ausgebildet ist und/oder eine ESD-Schutzeinrichtung (1) nach einem der Ansprüche 1 bis 6 aufweist und
- welche insbesondere als mit Motorkraft antreibbares Fahrzeug, insbesondere als eBike, Elektrofahrrad, Pedelec oder dergleichen ausgebildet ist.
